# EUROPEAN PATENT APPLICATION

(11) **EP 3 885 576 A1**
(43) Date of publication of application: **29.09.2021**
(21) Application number: 20166216.0
(22) Date of filing: 27.03.2020
(51) Int. Cl.: F03D 13/40

(54) **WIND TURBINE COMPONENT TRANSPORT ARRANGEMENT**

(71) Applicant: Siemens Gamesa Renewable Energy A/S, 7330 Brande (DK)
(72) Inventor: Soerensen, Johnny, 6920 Videbæk (DK)
(74) Representative: Aspacher, Karl-Georg

(57) **Abstract**

The invention describes a wind turbine component transport arrangement (1) comprising a plurality of rotor blade support frames (1R); a plurality of nacelle support frames (IN); and a plurality of tower section support frames (IT); wherein the dimensions of a support frame (1R, 1T, 1N) correspond to the dimensions (C_{L}, SC_{H}, SC_{L}) of a stack (SC) of standard containers (C). The invention further describes a method of transporting wind turbine components (51, 52, 53) on a containership (3) using such a wind turbine component transport arrangement (1).

## Description

The invention describes a wind turbine component transport arrangement and a method of transporting wind turbine components on a containership.

Wind turbine components may need to be transported by sea from a port in the country of manufacture to a destination at an offshore installation site, or to a port in a destination country. This is generally done using specialized ships that can accommodate tower sections, rotor blades and nacelle of one or more wind turbines. Some specialized ships can carry components for a few wind turbines, but it is usual to charter several different ships, each dedicated to the transport of a single type of component, e.g. one ship for the transport of tower sections, another ship for the transport of nacelles, and another ship for the transport of rotor blades.

However, when building a new wind park or extending an already existing one, it can be necessary to transport components of many wind turbines to a destination port or to an installation site. This means that one or more specialized ships must be chartered to transport the components to the destination. Charter costs can make up a significant fraction of the total cost of a wind park.

It is known to use frames to support wind turbine rotor blades during transport, and to use frames that correspond in size to the end face of a standard container. Such frames are practical since the load (i.e. the rotor blade) can be arranged on the flatbed of a container lorry or on the deck of a containership. However, such relatively small frames cannot be used for transporting a load such as a tower section. Instead, tower sections are generally transported vertically on the specialized ships, and each tower section is secured to a circular bolt ring of a deck-mounted adapter. The vertical transport of tower sections can be hazardous, and can generally only be done in calm weather since high winds and/or high seas can cause the towers to oscillate dangerously.

A wind turbine nacelle is also difficult to transport for various reasons. If the generator is already installed in the nacelle, the overall weight can be in the order of 500 metric tons. A pre-mounted hub or spinner with pitch interfaces for the rotor blades adds to the total weight. Furthermore, a liquid-to-air heat exchanger may also be pre-mounted to the nacelle, adding to the complexity of the load shape. For these reasons, it is generally only possible to transport a small number of such pre-assembled nacelles on deck of a specialized vessel.

It is therefore an object of the invention to provide a more efficient way of transporting wind turbine components.

This object is achieved by the wind turbine component transport arrangement of claim 1, and by the method of claim 10 of transporting wind turbine components on a containership using such a wind turbine component transport arrangement.

According to the invention, the wind turbine component transport arrangement comprises a plurality of rotor blade support frames; a plurality of nacelle support frames; and a plurality of tower section support frames. The dimensions of a support frame correspond to the dimensions of one side of a stack of standard containers such as a 20' container or a 40' container. The dimensions of such containers are defined in the ISO 668 standard pertaining to the classification, dimensions and ratings of intermodal freight container. Containers that adhere to this standard are referred to generally as "standard containers". In the context of the invention, it shall therefore be understood that a stack of such standard containers results in a well-defined rectangular volume. Intermodal containers are generally stacked directly on top of each other and directly beside each other in a close configuration to prevent movement within the stack during transport, for example transport by sea. A support frame therefore has dimensions that correspond to one side of such a standard container stack. For example, the width of a support frame may be 40' (the length of a 40' standard container), and its height may be 34' (the height of a stack of four standard containers, each of which is 8' 6" in height).

A support frame may be understood to be an essentially "two-dimensional" or "flat" object that can be used in a vertical orientation. Of course, the support frame will have a certain thickness, but it shall be understood that the support frame lies essentially in a single plane. A support frame can be attached to a wind turbine component, but need not enclose the component.

An advantage of the inventive wind turbine component transport arrangement is that the support frames are specifically designed for use in any already available containership that can be loaded with standard containers. The invention arises from the insight that the design of a containership is not limited to carrying stacks of containers, but that this containership design can be exploited to transport very different objects. The inventor has recognised that the available space in a containership can be used in a novel fashion to transport objects that are very different from standard containers.

According to the invention, the method of transporting wind turbine components on a containership using such a wind turbine component transport arrangement comprises the steps of preparing a component frame assembly by securing a wind turbine component to a number of support frames; lifting the component frame assembly onto a deck or into the cargo hold of the containership; and placing the component frame assembly in a space corresponding to the space that would be occupied by a stack of standard containers.

An advantage of the inventive method is that very large numbers of wind turbine components can be transported by a single ship. The loading procedure can be favourably quick, since it is possible to secure each component in its support frame well in advance, so that the frame assemblies can be directly loaded onto the containership using a suitable crane arrangement.

A further advantage of the inventive method is that, if the containership is used to transport the wind turbine components to a destination port, the containership can be loaded with container cargo for its return trip, thus eliminating the costs associated with an "empty" trip.

Particularly advantageous embodiments and features of the invention are given by the dependent claims, as revealed in the following description. Features of different claim categories may be combined as appropriate to give further embodiments not described herein.

The inventive transport arrangement can be based on any suitable container dimensions. A 40' (40-foot) container has a length of 40', a width of 8', and a height of 8' 6". A 20' (twenty-foot) container has a length of 20', and the same width and height as a 40' container. Other container dimensions are in widespread use, for example the 40' high-cube container, the 45' high-cube container, the 48' container, the 53' container, etc. The most commonly used intermodal containers are the 40-foot and 20-foot containers. In the following therefore, without restricting the invention in any way, it may be assumed that a standard container is a 40' container with a length of 12.192 m.

The inventive transport arrangement is intended primarily for the transport of large wind turbine components, for example to transport components of a direct-drive multi-megawatt wind turbine. Such a wind turbine can have a tower constructed from tower sections that are each 55 m in length, a pre-assembled nacelle with a mass in the order of 500 metric tons, and rotor blades each with a length in the order of 100 m. In the following, it may be assumed that the support frames are constructed for the transport of these or similar wind turbine components.

Preferably, a wind turbine component is supported during transport by at most two vertical support frames such that the long axis of the component assumes an essentially horizontal orientation. For example, a tower section can be supported by connecting it between a pair of vertical support frames such that the long axis of the tower section is essentially horizontal.

A vertical support frame may be regarded as a basic element that can be adapted for the purpose of supporting a specific load. The support frame has the dimensions of an end face of a container stack, so that the terms "support frame" and "end-face frame" may be used interchangeably. For example, to support a tower section, an end-face frame can be equipped with a circular bolt ring with a suitable diameter. The circular flange of a tower section can then be connected to the bolt ring of this "tower section support frame" by means of fasteners. Preferably, the bolt ring is adjustable so that it can adapt to flanges of various diameters.

Similarly, to support a rotor blade, a first end-face frame can be equipped with a clamp that is shaped to fit about the airfoil portion of the rotor blade, and a second end-face frame can be equipped with a circular bolt ring. The airfoil end of the rotor blade can be inserted through the opened clamp of the first "rotor blade support frame", and the circular root end can then be connected to the bolt ring of the second "rotor blade support frame" by means of fasteners. The airfoil clamp can then be closed to securely hold the airfoil in place during transport.

As indicated above, the width of an end-face frame is the same as the length of a standard container, while the height of a end-face frame is an integer multiple of the standard container height. The inventive transport arrangement may avail of support frames with different heights, in order to provide optimal stacking of loads that occupy different volumes. For example, one support frame may have a height corresponding to the height of a stack of four standard containers (this may be used in a tower frame assembly), and a further support frame may have a height corresponding to the height of a stack of three standard containers (this may be used in a nacelle frame assembly), etc.

The support frames of the inventive transport arrangement are constructed to make use of containership features that are provided for the transport of containers. To ensure that containers remain in place during marine transport, any deck or floor of a containership generally has fittings at specific positions to connect to the corners of containers. Such a fitting may be a fairlead or pad-eye. Another well-established type of fitting is the "twistlock" which can engage with corner castings in the container outer corners to lock the container in place during transport. In a preferred embodiment of the invention, a support frame comprises corner castings at its outer corners, wherein a corner casting is shaped to engage with a containership twistlock.

In a preferred embodiment of the invention, the support frames are stackable, so that a component frame assembly can be stacked on top of another component frame assembly. To this end, the upper edge of a support frame is shaped to engage with the lower edge of a further support frame, and vice versa.

The transport of a nacelle is preferably done using a nacelle support frame that includes a pair of vertical end frames and a horizontal base frame. The width of the base frame corresponds to the length of a standard container, and the length of the base frame corresponds to the length of a stack of standard containers. To support the nacelle during transport, the nacelle support frame can further comprise one or more nacelle cradles that support the nacelle from underneath. A nacelle cradle can be mounted to the horizontal base frame. The vertical end frames can be secured at each of the "narrow" sides of the base frame. A system of lashing straps, tie-down straps or similar can be used to secure the load. For example, tie-down straps can be anchored to the nacelle support frame at various points. After arranging a strap about the nacelle, it can be tightened using a tensioning means such as a ratchet. The entire nacelle frame assembly can be lifted by a crane arrangement and loaded onto a containership.

A crane arrangement preferably involves a pair of cranes acting in tandem, e.g. one crane is operated to lift a first end frame and the other crane is operated according to a lifting choreography to lift the second end frame. The cranes are operated so that the load is held essentially horizontally (i.e. the end-frames are held vertically) until it is lowered into place on the containership.

The transport of a tower section is preferably done using a pair of tower section support frames. A tower section support frame may be provided with an annular fitting that matches the bolt circle of the tower section flange. In a preferred embodiment of the invention, the step of preparing a tower section frame assembly comprises attaching the flange at one end of the tower section to a bolt ring of one tower section support frame, and securing the flange at the other end of the tower section to a bolt ring of another tower section support frame. The support frames are both vertical or upright, while the tower section is held horizontally. The entire tower section frame assembly can be lifted by a crane arrangement (as described above) and loaded onto a containership. A tower section may have a length in the order of 50 - 55 m, less than the width of a large containership. For example, the width of the containership hold may be about 59 m. The support frames can be mounted directly to the tower flanges, and the tower section frame assembly is given structural stiffness by the tower section. In this case, a tower section frame assembly can be loaded into the hold (below deck) of such a containership. Several tower section frame assemblies can be stacked on top of each other or on top of previously loaded nacelle frame assemblies.

The transport of a rotor blade is preferably done using a pair of rotor blade support frames. One type of rotor blade support frame may be provided for attaching to the root end of the blade, for example it may be equipped with a bolt ring that matches the annular arrangement of bushings at the circular blade root end. Another type of rotor blade support frame may be dedicated to supporting the airfoil part of the rotor blade, and may be equipped with a blade clamp or cradle that can fit about the airfoil profile at a distance outward along the blade. Of course, a rotor blade support frame can be constructed to be able to fulfil both functions. In a preferred embodiment of the invention, the step of preparing a rotor blade frame assembly comprises attaching the root end of the rotor blade to a bolt ring of one rotor blade support frame and securing the airfoil portion of the rotor blade to an airfoil clamp of another rotor blade support frame. The support frames are both vertical or upright, while the rotor blade is held horizontally. The entire rotor blade frame assembly can be lifted by a crane arrangement (as described above) and loaded onto a containership. A rotor blade may have a length in excess of 100 m, which is greater than the width of even a large containership. Therefore, in a preferred embodiment of the invention, a rotor blade frame assembly is loaded onto a containership such that the long axis of the rotor blade is arranged in a port-starboard direction, the root end is aligned with one long side of the containership, and the tip end of the rotor blade extends outward beyond the other long side of the containership.

In a further preferred embodiment of the invention, especially if the wind turbine components are to be transported to an installation site, the component frame assemblies are loaded in a specific order, for example with the heaviest components at the lower levels in the hold, and the lighter components above decks. The specific loading order may also take into account the order in which the components will be required at an offshore wind park installation site. Such a loading order may be preferred in a case in which the containership is loaded to complete capacity. For example, the loading sequence may be such that tower sections for one or two wind turbines - even though they are heavy - are arranged at the uppermost levels so that these can be unloaded first so that the towers can be assembled at the installation site. Furthermore, the loading sequence may be such that a corresponding number of nacelles are made accessible after those initial tower sections have been unloaded. These nacelles can then be placed on top of the already assembled towers. After that, a corresponding number of rotor blades is unloaded and the assembly of those wind turbines can be completed. After unloading those initial sets of components, it is easier to access the remaining components. The tower sections of the next wind turbines may now be directly accessible from the cargo hold, or it may be possible to access them after some re-arranging of the other component frame assemblies on the containership deck.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Figure 1 shows a stack of standard 40-foot containers;
Figure 2 shows a containership loaded according to the inventive method;
Figure 3 shows a rotor blade frame assembly of an embodiment of the inventive transport arrangement;
Figure 4 shows a tower section frame assembly of an embodiment of the inventive transport arrangement;
Figure 5 shows a nacelle frame assembly of an embodiment of the inventive transport arrangement;
Figure 6 shows a schematic side view of a containership to illustrate a possible loading sequence for the inventive transport arrangement;
Figure 7 shows a detail of a support frame of the inventive transport arrangement;
Figure 8 shows a prior art approach to using a containership 3 to transport wind turbine rotor blades 51.

In the diagrams, like numbers refer to like objects throughout. Objects in the diagrams are not necessarily drawn to scale.

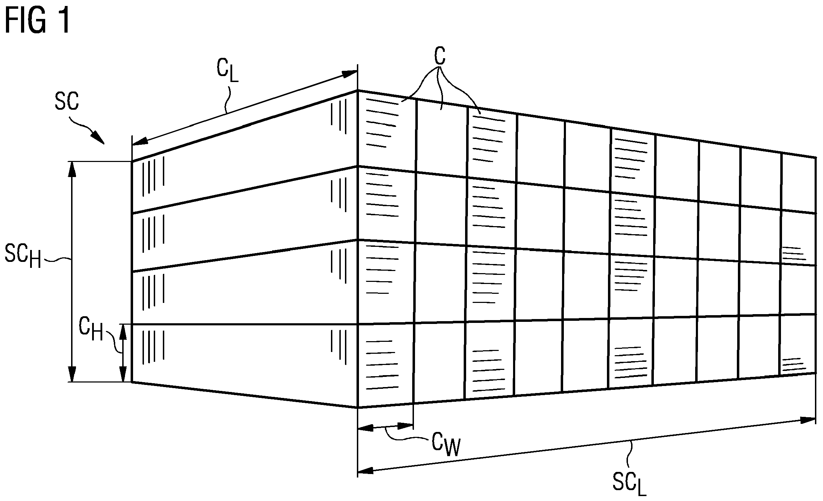

Figure 1 shows a stack SC of standard 40-foot containers C. Each container C can have a length C_{L} of 40' (12.192 m), a width C_{W} of 8' (2.438 m) and a height C_{H} of 8'6" (2.591 m) . The stack SC of containers C has a width C_{L} that corresponds to a single container length C_{L}. The stack length SC_{L} is an integer multiple of the container width C_{W}. In this exemplary embodiment, the stack length SC_{L} is ten times the container width C_{W}. The stack height SC_{H} is an integer multiple of the container height C_{H}. In this exemplary embodiment, the stack height SC_{H} is four times the container height C_{H}. Each frame assembly that will be used to transport a wind turbine component will be dimensioned to fit into the space occupied by such a container stack SC, whereby the frame height and frame length can be determined by the dimensions of the component that are to be transported, while at the same time being an integer multiple of a container height C_{H} and a container width C_{W}, respectively.

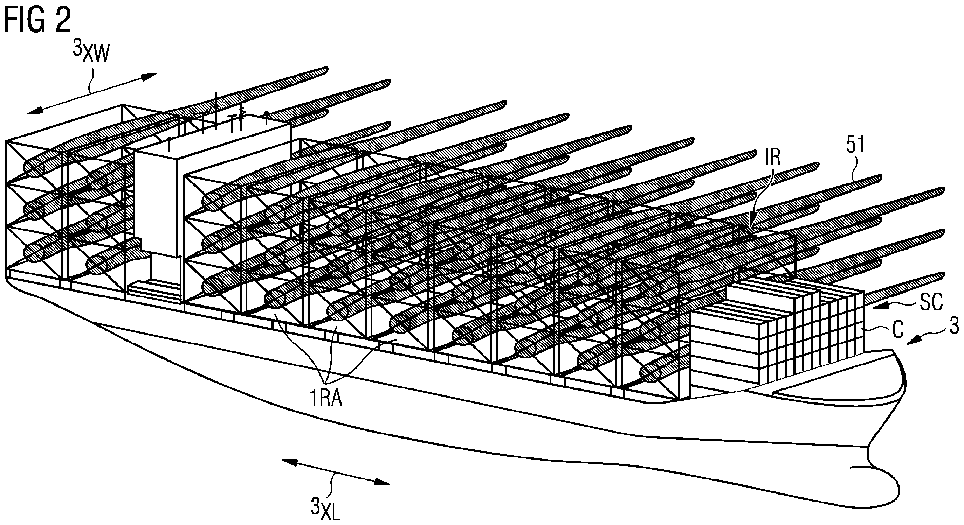

Figure 2 shows a containership 3 that can be loaded with standard 40' containers C. The diagram indicates the usual tight packing configuration of containers C in a stack SC at the prow of the ship. The containers C are arranged lengthwise with respect to the fore-aft axis 3_{XL} of the ship 3. A typical containership can have a length of about 300 m and a width of about 40 m, and it shall be understood that larger containerships are currently being deployed. Instead of transporting such stacked containers, the containership 3 is used to transport wind turbine components in frame assemblies. Some exemplary frame assemblies 1RA are indicated in the diagram, carrying rotor blades 51. Each frame assembly 1RA occupies a rectangular volume that corresponds to the volume that would be occupied by a stack of containers as explained in Figure 1. The rotor blade frame assemblies 1RA are arranged so that each rotor blade lies parallel to the port-starboard axis 3_{XW} of the ship 3. The rotor blades 51 are longer than the ship is wide, and extend beyond the port side in this embodiment.

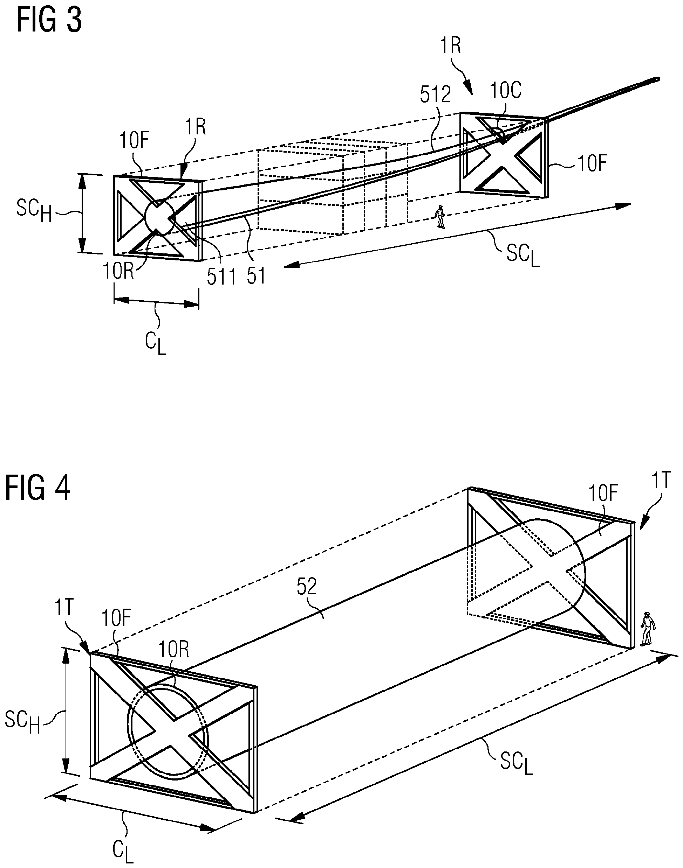

Figure 3 shows a rotor blade frame assembly 1RA. The diagram shows two rotor blade support frames 1R, each based on an end frame 10F which has been modified for the purpose of supporting a rotor blade. The root end 511 of a rotor blade 51 is connected to the bolt ring 10R of a first rotor blade support frame 1R by means of fasteners. The airfoil portion 512 of the rotor blade 51 is held in a cradle 10C of a second rotor blade support frame 1R. The vertical rotor blade support frames 1R are arranged at a distance corresponding to the length SC_{L} of a container stack SC as explained in Figure 1. Similarly, the height of a rotor blade support frame 1R corresponds to the height SC_{H} of a container stack SC, and the width of a rotor blade support frame 1R corresponds to the width C_{L} of a container stack SC, i.e. to the length C_{L} of a standard container C. For a rotor blade 51 with a root end diameter of 8 m and a length of 100 m or more, the dimensions of the support frame 1R and the frame assembly 1RA may be based on a 3 x 20 stack of 40-foot containers. The containers that could fit into this volume are indicated in the diagram by ghost outlines. The rotor blade frame assembly 1RA can be lifted from the assembly site (e.g. from the quayside of a container port) onto the upper deck of the containership, for example using a synchronized pair of cranes acting in tandem, each crane lifting one of the rotor blade support frames 1R.

Figure 4 shows a tower section frame assembly 1TA. The diagram shows two tower section support frames 1T, each based on an end frame 10F which has been modified for the purpose of supporting a tower section. Each circular end of a tower section 52 is connected to the bolt ring 10R of a tower section support frame 1T by means of fasteners. The vertical tower section support frames 1T are arranged at a distance corresponding to the length SC_{L} of a container stack SC as explained in Figure 1. Similarly, the height of a tower section support frame 1T corresponds to the height SC_{H} of a container stack SC, and the width of a tower section support frame 1T corresponds to the width C_{L} of a container stack SC, i.e. to the length C_{L} of a standard container C. For a tower section 52 with an end diameter in the order of 8 m and a length of 50 - 55m, the dimensions of the support frame 1T and the frame assembly 1TA may be based on a 4 x 20 stack of 40-foot containers. The height of such a stack exceeds 10 m, so that the frame assembly 1TA can be used for tower sections with a diameter in the order of 10 m (such diameters will not be unusual in future wind turbines). The containers that could fit into this volume are indicated in the diagram by ghost outlines. The tower section frame assembly 1TA can be lifted from the assembly site (e.g. a container port) onto the upper deck of the containership, for example using a synchronized pair of cranes acting in tandem, each crane lifting one of the vertical tower section support frames 1T.

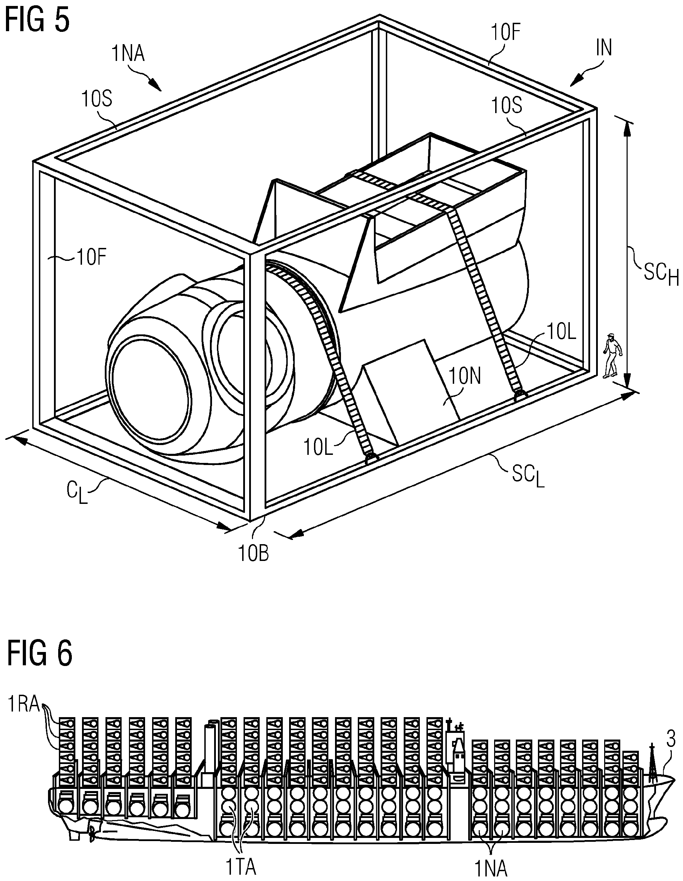

Figure 5 shows a nacelle frame assembly 1NA, comprising a pre-assembled nacelle 53 (with generator, hub, helicopter hoisting platform and heat-exchanger already installed) secured to a nacelle frame 1N. The nacelle frame 1N in this exemplary embodiment is assembled from a horizontal base frame 10B, two vertical end frames 10F, and frame struts 10S to add stability to the assembly 1NA. Lifting fittings such as eyelets may be assumed to be provided. The nacelle frame assembly 1NA may comprise fittings that secure the nacelle to the frame 1N, for example a cradle 10N that supports the nacelle 53 from underneath, and tensioning means (not shown) for tie-down straps 10L used to securely lash the nacelle 53 to the frame 1N. The end frames 10F are arranged at a distance corresponding to the length SC_{L} of a container stack SC as explained in Figure 1. Similarly, the height of an end frame 10F corresponds to the height SC_{H} of a container stack SC, and the width of an end frame 10F corresponds to the width C_{L} of a container stack SC, i.e. to the length C_{L} of a standard container C. For a nacelle 53 with a length in the order of 20 - 25 m and a height/width in the order of 8.5 m, the dimensions of the support frame 1N and the frame assembly 1NA may be based on a 4 x 10 stack of 40-foot containers. A support frame 1N with such dimensions can be used in future to transport even larger nacelles, which may be expected to exceed 10 m in width/height. The containers that could fit into this volume are indicated in the diagram by ghost outlines. The nacelle frame assembly 1NA can be lifted from the assembly site (e.g. at a container port) into the cargo hold of a containership 3.

Figure 6 shows a schematic side view of a containership to illustrate a possible loading sequence. In this exemplary embodiment, several nacelle frame assemblies 1NA are first loaded into the cargo hold of the containership 3. These arranged over the complete length (in fore-aft direction) of the hold. Subsequently, tower section frame assemblies 1TA are loaded into the cargo hold. These are arranged on top of the nacelle frame assemblies 1NA to form stacks. Subsequently, rotor blade frame assemblies 1RA are loaded onto the decks of the containership 3. These are also stacked as shown in the diagram. Here, the rotor blade frame assemblies 1RA are loaded and positioned so that root ends of the rotor blades are aligned along the starboard side of the containership 3. Owing to their length, the rotor blades will extend beyond the port side of the containership 3 as explained in Figure 2.

The containership 3 is loaded with frame assemblies 1RA, 1TA, 1NA for transport to a destination such as an offshore wind park site. With the later unloading procedure in mind, the component frame assemblies 1RA, 1TA, 1NA can be loaded in a specific sequence that allows wind turbine construction to commence directly once the containership 3 has reached its destination. Such a loading sequence may be compiled so that tower sections and nacelles of two or more wind turbines are directly accessible at the upper levels (along with the corresponding number of rotor blades). Once those wind turbines have been assembled, it is then possible to access the tower sections and nacelles further down in the cargo hold.

If the containership 3 is used to transport wind turbine components from one port to a destination port, the containership 3 can be loaded with container cargo for its return trip.

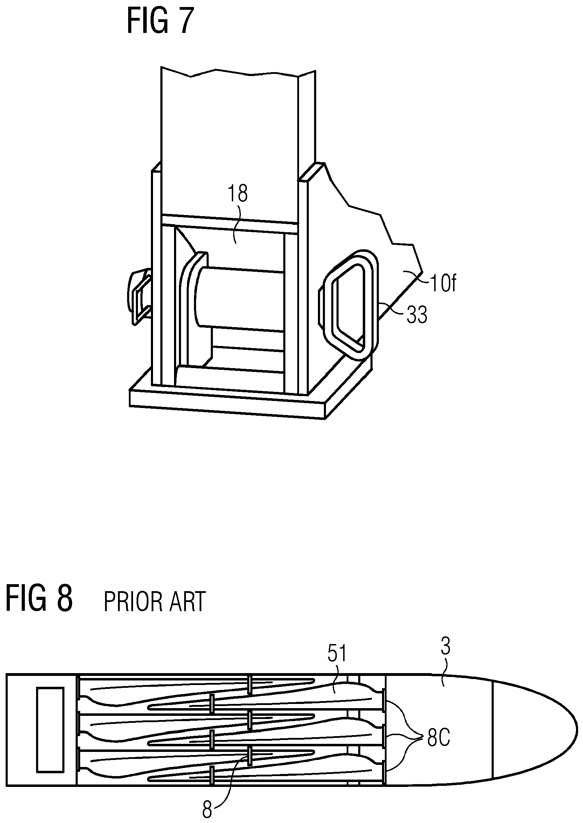

Figure 7 shows a detail at the corner of a support frame 10F that forms the basis of each support frame 1R, 1T, 1N explained above. The support frame 10F has corner castings 18 at each corner, shaped to engage with a twistlock 33 or other attachment interface provided on a deck of the containership or in the cargo hold.

Figure 8 shows a prior art approach to using a containership 3 to transport wind turbine rotor blades 51. The diagram shows a number of rotor blades 51 each supported by a root-end frame 80 and a tip-end frame 81. The dimensions of these frames are based on the width and height of a standard container so that each rotor blade 51 can be transported by lorry, rail, or ship. However, this means that the rotor blades 51 can only be loaded in a fore-aft direction on the containership. As explained above, it is not possible to use such frames to support tower sections or nacelles, so this approach can only be used to transport rotor blades 51, and only in the configuration shown here. Furthermore, the rotor blade length is limited to the available deck space in fore-aft direction, so that this approach may not be possible for very long rotor blades.

Although the present invention has been disclosed in the form of preferred embodiments and variations thereon, it will be understood that numerous additional modifications and variations could be made thereto without departing from the scope of the invention. For example, a frame assembly can be provided for the transport of another type of large component such as a transition piece required between a wind turbine tower and a monopile foundation.

For the sake of clarity, it is to be understood that the use of "a" or "an" throughout this application does not exclude a plurality, and "comprising" does not exclude other steps or elements.

## Claims

1. A wind turbine component transport arrangement (1) comprising
- a plurality of rotor blade support frames (1R);
- a plurality of nacelle support frames (1N); and
- a plurality of tower section support frames (1T); wherein the dimensions (C_{L}, SC_{H}, SC_{L}) of a support frame (1R, 1T, 1N) correspond to the dimensions of a stack (SC) of standard containers (C).

2. A wind turbine component transport arrangement according to claim 1, wherein a support frame (1R, 1T, 1N) comprises a number of corner castings (18), and wherein a corner casting (18) is shaped to engage with a containership twistlock (33).

3. A wind turbine component transport arrangement according to claim 1 or claim 2, wherein the lower edge of a support frame (1R, 1T, 1N) is shaped to engage with the upper edge of a further support frame (1R, 1T, 1N).

4. A wind turbine component transport arrangement according to any of the preceding claims, wherein the width (C_{L}) of a component support frame (1R, 1T, 1N) corresponds to the length (C_{L}) of a 40-foot standard container (C).

5. A wind turbine component transport arrangement according to any of the preceding claims, wherein the height (SC_{H}) of a component support frame (1R, 1T, 1N) is an integer multiple of a standard container height (C_{H}).

6. A wind turbine component transport arrangement according to any of the preceding claims, wherein a rotor blade support frame (1R) comprises a bolt circle (11) to receive the root end (511) of a rotor blade (51).

7. A wind turbine component transport arrangement according to any of the preceding claims, wherein a rotor blade support frame (1R) comprises an airfoil clamp (12) to support the airfoil portion (512) of a rotor blade (51).

8. A wind turbine component transport arrangement according to any of the preceding claims, wherein a tower section support frame (1T) comprises a bolt circle (13) to receive a flange (521) of tower section (52).

9. A wind turbine component transport arrangement according to any of the preceding claims, wherein a nacelle support frame (1N) comprises a cradle (10N) shaped to support a nacelle (53).

10. A method of transporting wind turbine components (51, 52, 53) on a containership (3) using a wind turbine component transport arrangement (1) according to any of claims 1 to 9, which method comprises the steps of
- preparing a component frame assembly (1RA, 1TA, 1NA) by securing a wind turbine component (51, 52, 53) to a number of support frames (1R, 1T, 1N);
- lifting the component frame assembly (1RA, 1TA, 1NA) onto a deck (32) or into the cargo hold (31) of the containership (3); and
- placing the component frame assembly (1RA, 1TA, 1NA) in a space provided for a stack of standard containers (2S).

11. A method according to claim 10, comprising a step of stacking a component frame assembly (1RA, 1TA, 1NA) on top of another component frame assembly (1RA, 1TA, 1NA).

12. A method according to claim 10 or claim 11, wherein the step of preparing a rotor blade frame assembly (1RA) comprises attaching the root end (511) of the rotor blade (51) to a bolt circle (11) of a first rotor blade support frame (1R), and securing the airfoil portion (512) of the rotor blade (51) to an airfoil clamp (12) of a second rotor blade support frame (1R).

13. A method according to any of claims 10 to 12, wherein the step of preparing a tower section frame assembly (1TA) comprises attaching a flange (521) at one end of a tower section (52) to a bolt circle (13) of a first tower section support frame (1T), and attaching a flange (521) at the other end of the tower section (52) to a bolt circle (13) of a second tower section support frame (1T).

14. A method according to any of claims 10 to 13, wherein the step of preparing a nacelle frame assembly (1NA) comprises mounting a nacelle (53) onto a nacelle cradle (10N) of a nacelle support frame (1N).

15. A method according to any of claims 10 to 14, wherein a component frame assembly (1RA, 1TA, 1NA) is positioned in the containership such that its longitudinal axis (1L) is transverse to the longitudinal axis (3_{XL}) of the containership (3).
